(19) Europäisches Patentamt
European Patent Office
Office européen des brevets

(11) Veröffentlichungsnummer: **0 014 343**
**B1**

(12) **EUROPÄISCHE PATENTSCHRIFT**

(45) Veröffentlichungstag der Patentschrift: **02.06.82**

(51) Int. Cl.³: **B 01 J 20/10** // C01B33/24

(21) Anmeldenummer: **80100198.3**

(22) Anmeldetag: **16.01.80**

(54) **Calciumsilikatgranulat bzw. -pulver und dessen Verwendung.**

(30) Priorität: **19.01.79 DE 2902108**

(43) Veröffentlichungstag der Anmeldung: **20.08.80 Patentblatt 80/17**

(45) Bekanntmachung des Hinweises auf die Patenterteilung: **02.06.82 Patentblatt 82/22**

(84) Benannte Vertragsstaaten: **AT BE CH FR GB IT LU NL SE**

(56) Entgegenhaltungen:
**BE-A-530 812**
**CH-A-359 690**
**GB-A-1 301 172**
**US-A-2 966 441**
**US-A-3 144 346**
**CHEMICAL ABSTRACTS, Band 87, 1977, Zusammenfassung Nr. 138028t, Seite 116**
**CHEMICAL ABSTRACTS, Band 82, Nr. 16, 21. April 1975, Zusammenfassung Nr. 102885c, Seite 338**

(73) Patentinhaber: **Effem GmbH, Eitzer Landstrasse, D-2810 Verden/Aller (DE)**

(72) Erfinder: **Krämer, Walter, Uhlenkamp 1, D-3040 Soltau-Friedrichseck (DE)**
Erfinder: **Föllmann, Rainer, Dr. Dipl.-Chem., Blumenstrasse 22, D-4950 Minden (DE)**

(74) Vertreter: **Goddar, Heinz, Dr., FORRESTER & BOEHMERT Widenmayerstrasse 4/I, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Calciumsilikatgranulat bzw. -pulver und dessen Verwendung

Die Erfindung betrifft die Verwendung von weiter unten festgelegten Calciumsilikatgranulaten bzw. -pulvern zur oleophilen Ab- bzw. Adsorption..

Bei den für den Verwendungszweck der Flüssigkeitsabsorption beziehungsweise -adsorption eingesetzten bekannten Produkten handelt es sich im wesentlichen um Naturprodukte mineralischen oder organischen Ursprunges, wie Bimsstein, Tonmineralien, beispielsweise Sephiolithe, Holzmehle und Kieselgur, die aufgrund ihrer natürlichen Porosität hydrophile und/oder lipophile Eigenschaften besitzen. Organische Produkte haben jedoch den Nachteil von unerwünschten Nebenwirkungen bei ihrer Verwendung, wie ihre Brennbarkeit. Andererseits neigen mineralische Produkte, wie Tonmineralien, durch Aufnahme von Flüssigkeiten, hauptsächlich nach Erreichen der Saugkapazität, in der Regel zum Quellen und damit zu einer plastischen Konsistenz (Erweichen) sowie zum Verklumpen. Noch ausgeprägter ist dies bei Kieselgur, welche stark klebrig, schmierig und sogar breiig wird. Diese nachteiligen Eigenschaften führen zwangsläufig zu Schwierigkeiten bei der Handhabung derartiger Produkte. Bimsstein hat den Nachteil der zu geringen Saugfähigkeit. Daher wird er mit Sepiolithen vermischt verwendet, was wiederum die genannten schwerwiegenden Nachteile der letzteren mit sich bringt.

Da es sich bei diesen bekannten Ab- und Adsorptionsmitteln vorzugsweise um Naturprodukte handelt, haben sie auch noch den Nachteil, daß sie in der Regel einer größeren Variationsbreite hinsichtlich ihrer chemischen und mineralischen Zusammensetzung unterliegen und sich in der Art und Menge ihrer Verunreinigungen unterscheiden. Durch Abmischen beispielsweise mit Sand wird eine Kompensation dieser bekannten Nachteile angestrebt, was jedoch zwangsläufig infolge einer Konzentrationsverminderung der wirksamen Bestandteile zu einer verminderten Saugfähigkeit der Produkte führt, ohne die genannten nachteiligen Eigenschaften effektiv aufzuheben.

In der DE-A-2 640 341 sind Absorptionsmittelgranulate mit Porenstruktur, insbesondere zur Verwendung als Tierstreu, beschrieben, die dadurch hergestellt werden, daß man einen Zuschlagstoff mit einem Bindemittel und einem Treibmittel vermischt, die porisierte Mischung in einen Autoklaven erhitzt und aushärtet, das gehärtete Produkt zerkleinert und dieses schließlich siebt. Als Zuschlagstoff wird dabei Quarzsand (90 µm) bevorzugt; als Bindemittel kann Kalk oder Brandkalk verwendet werden. Die olephile Ab- oder Adsorption ist nicht angesprochen. Hergestellt werden die Absorptionsmittelgranulate nach der DE-A-2 640 341 dadurch, daß dem Ausgangsgemisch ein Treibmittel, welches eine anionenaktive grenzflächenaktive Substanz, wie z. B. Seifenlösung sein kann, zugegeben und das Gesamtgemisch verschäumt wird.

Andererseits ist aus der US-A-3 144 346 die Erzeugung von Poren in Calciumsilikatprodukten durch Mischung einer Aufschlämmung von Calciumoxid und Siliziumdioxid enthaltenden Materialien mit einem vorher erzeugten Schaum bekannt, wobei aber eine olephile Ab- oder Adsorption ebenfalls nicht angesprochen ist.

Der Erfindung liegt die Aufgabe zugrunde. unter Behebung der eingangs beschriebenen Nachteile des Standes der Technik die Verwendung von neuen Produkten mit niedrigem Schüttgewicht als Ab- bzw. Adsorptionsmittel olephiler Art für Flüssigkeiten, Dämpfe und Gase mit besserer Saugfähigkeit, und zwar beschleunigtem Aufsaugvermögen bei besserer Saugkapazität (Speichervolumen) und gleichmäßigem Körnungsaufbau, welche nicht quellend, nicht klebend und nicht schmierend sind, sondern im Gegenteil geruchbindend und ferner bakterizid sowie nicht staubend und nicht färbend sind und auch mit Harnsäure keine Geruchsbildung ergeben, zu schaffen.

Erfindungsgemäß wird diese Aufgabe durch die Verwendung von Calciumsilikatgranulat bzw. -pulver mit Mikroporenstruktur, welches durch Umsetzen von kristallinem und gegebenenfalls amorphem Siliciumdioxid beziehungsweise dieses oder diese enthaltenden Materialien mit Calciumoxid beziehungsweise dieses enthaltenden Materialien in einem Molverhältnis von CaO zu $SiO_2$ von 0,8 : 1 bis 1,1 : 1 unter Homogenisieren derselben in Wasser und Formen, Autoklavenhärten, Zerkleinern, Trocknen und Klassieren erhalten worden ist, mit der weiteren Maßgabe, daß das Homogenisieren bei der Umsetzung durch Dispergieren der festen Ausgangsstoffe im Wasser unter Zugabe einer vorher in Wasser in einen mikroporigen stabilen Schaum überführten anionenaktiven grenzflächenaktiven Substanz durchgeführt worden ist, als olephiles Ab- bzw. Adsorptionsmittel.

Gegenstand der nicht vorveröffentlichten EP-A-7 586 ist ein Verfahren zur Herstellung von Calciumsilikatgranulaten beziehungsweise -pulvern mit Mikroporenstruktur durch Umsetzen von kristallinem und gegebenenfalls amorphem Siliciumdioxid beziehungsweise dieses oder diese enthaltenden Materialien mit Calciumoxid beziehungsweise dieses enthaltenden Materialien in einem Molverhältnis von CaO zu $SiO_2$ von 0,8 : 1 bis 1,1 : 1 unter Homogenisieren derselben in Wasser und Formen, Autoklavenhärten, Zerkleinern, Trocknen und Klassieren, bei welchem das Homogenisieren bei der Umsetzung durch Dispergieren der festen Ausgangsstoffe im Wasser unter Zugabe einer vorher in Wasser in einen mikroporigen stabilen Schaum überführten anionenaktiven grenzflächenaktiven Substanz durchgeführt wird.

Es wurde überraschenderweise festgestellt, daß die so erhaltenen Produkte mit überlegendem Ergebnis als oleophile Ab- bzw. Adsorptionsmittel für Flüssigkeiten, Dämpfe und Gase verwendet

werden können.

Als anionenaktive grenzflächenaktive Substanz kann vorteilhaft eine solche (als Lösung) mit einem Aktivsubstratgehalt (vor dem Lösen in Wasser) von 30 bis 60%, beispielsweise 50%, verwendet worden sein. Es können aber auch durch Wasserentzug durch Trocknung enthaltene pulverförmige Produkte mit einem Aktivsubstanzgehalt bis zu 100% eingesetzt worden sein. Zweckmäßig ist die Konzentration der anionenaktiven grenzflächenaktiven Substanz in Wasser für den zum Homogenisieren zuzusetzenden mikroporigen stabilen Schaum bei Verwendung einer anionenaktiven grenzflächenaktiven Substanz mit einem Aktivsubstanzgehalt von 100% zu etwa 1,0 bis 2,5%, insbesondere 1,5%, und bei Verwendung einer anionenaktiven grenzflächenaktiven Substanz mit einem Aktivsubstanzgehalt von 30 bis 60% zu etwa 1,5 bis 3,5%, insbesondere 2%, gewählt worden. Soweit keine anionenaktive grenzflächenaktive Substanz mit einem Aktivsubstanzgehalt von 100% verwendet worden ist, beziehen sich diese Konzentrationsangaben auf das Produkt, wie es tatsächlich eingesetzt wurde, das heißt das, gegebenenfalls unreine, Chemieprodukt. Beispielsweise entspricht dann einer Konzentration der verwendeten anionenaktiven grenzflächenaktiven Substanz in Wasser von 2% bei einem Aktivsubstanzgehalt der ersteren von 50% eine Konzentration von 1% reiner grenzflächenaktiver Substanz in Wasser. Ein Beispiel für eine verwendbare anionenaktive grenzflächenaktive Substanz ist Natriumlaurylsulfat. Ferner ist es zweckmäßig, die Erzeugung des mikroporigen stabilen Schaumes mittels komprimierter Luft durchgeführt zu haben. Dabei ist vorteilhaft in der komprimierten Luft, die beispielsweise in einem Aktivschaumgenerator erzeugt worden ist, in feinster Verteilung die durch Verdünnen mit Wasser bereitete Lösung der anionenaktiven grenzflächenaktiven Substanz zu einem mikroporigen stabilen Schaum umgewandelt worden. Dieser Schaum hat die Konsistenz einer Schlagsahne und hat den Aktivschaumgenerator über eine Schlauchverbindung beziehungsweise Rohrleitung verlassen und ist zum Dispergierarbeitsgang geführt worden. Vorzugsweise ist als mikroporiger stabiler Schaum ein solcher mit einem Litergewicht von 30 bis 80 g/l, insbesondere 50 bis 60 g/l, verwendet worden. Die Menge der anionenaktiven grenzflächenaktiven Substanz richtete sich nach dem erzielbaren Schaumvolumen beim Schaumerzeugen, wie im Aktivschaumgenerator, und war in der Ausgangsmischung durch die angestrebte Rohdichte (Schüttgewicht) des herzustellenden Granulates beziehungsweise Pulvers bestimmt. Sie war also eine Funktion des Blähfaktors

$$= \left( \frac{\text{Volumen des Fertigproduktes}}{\text{Volumen der eingesetzten Feststoffmenge}} \right)$$

und auch im Hinblick auf die Stabilität des Schaumes und die Gewährleistung einer schonenden Einarbeitung desselben in die Ausgangsmischung zu wählen. Vorzugsweise ist die anionenaktive grenzflächenaktive Substanz (unverdünnt gerechnet) in einer Menge von etwa 300 bis 600 g/m³ Fertigprodukt verwendet worden.

Die mikroporige Produktstruktur der erfindungsgemäß verwendeten Calciumsilikatgranulate beziehungsweise -pulver ist von großer Bedeutung, da sie die angestrebten Produkteigenschaften, wie die hohe Saugkapazität sowie hohe Druckfestigkeit und niedrige Rohdichte (Schüttgewicht), sicherstellt.

Zweckmäßig sind als Siliciumdioxid und Calciumoxid beziehungsweise diese enthaltende Materialien solche Rohstoffe, welche möglichst wenig Verunreinigungen enthalten, verwendet worden. Es ist bevorzugt, als kristallines Siliciumdioxid Quarzmehl, d. h. ein durch Feinmahlen von Quarzsand hergestelltes Pulver mit einer Feinheit von weniger als 100 µm, verwendet zu haben. Die Mitverwendung von amorphem Siliciumdioxid beziehungsweise dieses enthaltenden Materialien ist möglich. Vorteilhafter ist es jedoch, nur kristallines Siliciumdioxid beziehungsweise dieses enthaltende Materialien verwendet zu haben. Vorzugsweise ist beziehungsweise sind als Calciumoxid beziehungsweise dieses enthaltendes Material gebrannter Kalk und/oder Kalkhydrat verwendet worden. Es ist bevorzugt, als Calciumoxid beziehungsweise dieses enthaltende Materialien Gemische von gebranntem Kalk und Kalkhydrat verwendet zu haben. Dabei ist es besonders bevorzugt, vom Calciumoxid beziehungsweise dieses enthaltenen Material einen Anteil von etwa 2/3 gebranntem Kalk und einen Anteil von etwa 1/3 Kalkhydrat verwendet zu haben. Dadurch ist nämlich die Löschwärme des gebrannten Kalkes zu einem bestimmten Teil vorweggenommen worden. Es kann aber auch allein gebrannter Kalk oder Kalkhydrat verwendet worden sein. Als gebrannter Kalk ist vorteilhaft Weißfeinkalk verwendet worden. Zweckmäßig ist die Zusammensetzung der festen Ausgangsstoffmischung wie folgt: Etwa 50 bis 57 Gew.-% Quarzmehl, etwa 28 bis 33 Gew.-% gebrannter Kalk und etwa 14 bis 17 Gew.-% Kalkhydrat. Wie bereits erwähnt kann der gebrannte Kalk ganz oder teilweise durch Kalkhydrat beziehungsweise das Kalkhydrat ganz oder teilweise durch gebrannten Kalk ersetzt gewesen sein. Vorteilhaft ist das Wasser (Summe des zur Schaumbildung erforderlichen Wassers und des Mischwassers) in einer Menge von 45 bis 70 Gew.-%, insbesondere 48 bis 60 Gew.-%, bezogen auf die eingesetzte Feststoffgemischmenge als Trockengewicht berechnet, verwendet worden. Von diesem Wasser sind zweckmäßig 8 bis 12% als zur Schaumbildung erforderliches Wasser und 88 bis 92% als Mischwasser eingesetzt worden.

Zweckmäßig ist nach dem Vermischen und Bereitstellen der Ausgangsstoffe für das Formen und vor

dem Autoklavenhärten eine Vorreaktion mit einer Zeitdauer von mindestens 30 Minuten durchgeführt worden. Es ist dies anders ausgedrückt die Zeit, welche nach dem Herstellen und Einfüllen der Ausgangsmischung in die Form bis zur Durchführung der Autoklavenhärtung erforderlich war. Innerhalb dieser Vorreaktionszeit ist eine ausreichende Versteifung für die Beanspruchung durch die Autoklavenhärtung mittels hochgespannten Dampfes erfolgt. Eine Verlängerung dieser Mindestvorreaktionszeit war nicht nachteilig. Vorzugsweise ist die Vorreaktion bei einer Temperatur von 70 bis 80° C durchgeführt worden. Im Falle der Verwendung von gebranntem Kalk, wie Weißfabrikkalk, ergab sich diese Temperatur zwangsläufig bei Einsatz von verhältnismäßig geringen Wassermengen durch die Reaktionswärme des gebrannten Kalkes, wobei eine Wärmezuführung anderer Art nicht zu erfolgen hatte. Im Falle der alleinigen Verwendung von Kalkhydrat war dagegen zur Erreichung der genannten Temperatur ein Vorwärmen des zugesetzten Wassers (Mischwassers) auf 70 bis 80° C erforderlich.

Im allgemeinen sind die Porenradien der erfindungsgemäß verwendeten Calciumsilikatgranulate beziehungsweise -pulvers weniger als 100 µm, vorzugsweise weniger als 60 µ, insbesondere 10 bis 20 µm.

So haben die erfindungsgemäß verwendeten Calciumsilikatgranulate beziehungsweise -pulver eine hohe Korneigenfestigkeit und damit hohe Druckfestigkeit und ein niedriges Schüttgewicht.

Die erfindungsgemäß verwendeten Calciumsilikatgranulate beziehungsweise -pulver können die folgenden Materialfestigkeits- und Materialdichteparameterwerte haben (hier und im folgenden bedeutet die internationale Dimension $N/mm^2$ Newton/Quadratmillimeter = 10 $kp/cm^2$):

| | |
|---|---|
| Druckfestigkeit in $N/mm^2$ | 6,5 bis 10,2 |
| Rohdichte in $kg/m^3$ | 400 bis 700 |
| Schüttgewicht in $kg/m^3$ | 250 bis 500 |
| (Schüttgewicht in $kg/m^3$ der Korngrößen bis 2,5 mm | 300 bis 500 |
| Schüttgewicht in $kg/m^3$ der Korngrößen von 2,5 bis 4 mm | 250 bis 450). |

Ferner zeichnen sich die erfindungsgemäß verwendeten Calciumsilikatgranulate beziehungsweise -pulver durch ein überlegen hohes und stets gleichmäßig reproduzierbares oleophiles Ab- beziehungsweise Adsorptionsvermögen aus. Noch dazu zeigen sie eine beschleunigte Aufsaugung, den sogenannten »Löschblatteffekt«. Ein großer Vorteil der erfindungsgemäßen Verwendung ist es, daß die erfindungsgemäß verwendeten Calciumsilikatgranulate beziehungsweise -pulver bei hoher Saugfähigkeit im Gegensatz zu den saugfähigsten Produkten des Standes der Technik selbst bei optimaler Nutzung nicht quellend, nicht klebend und nicht schmierend sind, also keinem Erweichen unterliegen, andererseits aber auch nicht stauben. Darüber hinaus sind sie auch nicht färbend.

Hinzu kommt als weiterer Vorteil der gleichmäßige Körnungsaufbau der erfindungsgemäß verwendeten Calciumsilikatgranulate beziehungsweise -pulver. Die gewünschte Korngröße kann durch Klassieren (wie mittels Siebens) eingestellt worden sein. Zweckmäßig ist die Korngröße der erfindungsgemäß verwendeten Calciumsilikatgranulate beziehungsweise -pulver bis 5 mm, wobei sich Korngrößen bis 2,5 mm als besonders günstig erwiesen haben.

Bei der Ab- bzw. Adsorption von Öl besteht ein weiterer Vorteil der erfindungsgemäßen Verwendung darin, daß bei den erfindungsgemäß verwendeten Calciumsilikatgranulaten bzw. -pulvern auch bei optimaler Flüssigkeitssättigung unter Druckbelastung kein Flüssigkeitsaustritt stattfindet. Die erfindungsgemäß verwendeten Calciumsilikatgranulate bzw. -pulver haben einen alkalischen pH-Wert von im allgemeinen 9 bis 10, vorzugsweise 9,4 bis 9,8 und wirken daher säurebindend. Ein weiterer Vorteil der erfindungsgemäßen Verwendung ist die bakterizide Wirkung der erfindungsgemäß verwendeten Calciumsilikatgranulate bzw. -pulver. Ein Beispiel für die erfindungsgemäße Verwendung besteht, bei der Ab- bzw. Adsorption von Dämpfen aus Gasen, auch in der Adsorption von Küchendunst, da dabei auch die Fettbestandteile adsorbiert werden können. Bei diesem speziellen Gebiet ist die leichte Austauschbarkeit und der hygienische Charakter der erfindungsgemäß verwendeten Calciumsilikatgranulate bzw. -pulver von besonderem Vorteil.

Wegen des erwähnten alkalischen pH-Bereiches der erfindungsgemäß verwendeten Calciumsilikatgranulate bzw. -pulver eignen sie sich besonders auch zum Abtrennen von sauren Bestandteilen, wie Chlorwasserstoff oder Kohlendioxid, aus Gasgemischen. Unter »oleophile Ab- bzw. Adsorption« wird im übrigen die Ab- bzw. Adsorption von Ölen, wie Mineralölen, Schmieröl und Pflanzenölen, gegebenenfalls auch aus solchen neben anderen Bestandteilen enthaltenden Medien wie Öl-in-Wasser-Dispersionen, verstanden. Es ist auch eine oleophile Ab- bzw. Adsorption neben einer hydrophilen Ab- bzw. Adsorption bis zur Erreichung der Saugkapazität durch Wahl des Calciumsilikatgranulates bzw. -pulvers möglich. Dies kann in der Weise von praktischer Bedeutung sein, daß das Öl ab- bzw. adsorbiert aufweisendes Calciumsilikatgranulat bzw. -pulver durch Wasserabsorption bzw. -adsorption zum Absinken gebracht wird. Ferner kann der Charakter der erfindungsgemäß verwendeten Calciumsilikatgranulate bzw. -pulver durch Zusätze und deren Menge in Richtung auf mehr hydrophiles Ab- beziehungsweise Adsorptionsverhalten zu oder in Richtung auf mehr oleophiles Ab- bzw. Adsorptionsverhalten zu steuern, also zu Gunsten der Ab- bzw. Adsorption der einen oder anderen Flüssigkeit, die sich in ihrer Oberflächenspannung unterscheiden, geändert

werden.

Nach einer weiteren vorteilhaften Ausführungsform der erfindungsgemäßen Verwendung wird als Calciumsilikatgranulat bzw. -pulver ein solches mit einem Gehalt an mindestens einem Polyamidwachs mit einem Schmelzpunkt von 170 bis 195° C, insbesondere 180 bis 190° C, und einem Zersetzungspunkt von mindestens 200° C als Zusatz eingesetzt. Dabei ist es bevorzugt, als Calciumsilikatgranulat bzw. -pulver ein solches, welches als Polyamidwachs(e) ein solches bzw. solche von nicht amorpher Struktur in mikronisiertem (feingemahlenem) Zustand enthält, einzusetzen. Besonders bevorzugt ist es, als Calciumsilikatgranulat bzw. -pulver ein solches, welches als Polyamidwachs(e) ein Diamidwachs bzw. Diamidwachse der allgemeinen Formel

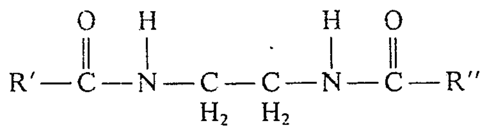

worin R′ und R″ für Alkylreste mit 12 bis 20, insbesondere 12 bis 18 Kohlenstoffatomen steht, wobei ganz besonders bevorzugt R′ einen Alkylrest mit 12 Kohlenstoffatomen und R″ einen Alkylrest mit 20 oder noch vorteilhafter 18 Kohlenstoffatomen bedeuten, enthält, einzusetzen. Bei dieser Ausführungsform ist die Ab- bzw. Adsorption oleophil bzw. nach dem oleophilen Verhalten zu verschoben.

Nach einer anderen vorteilhaften Ausführungsform der erfindungsgemäßen Verwendung wird als Calciumsilikatgranulat bzw. -pulver ein solches mit einem Gehalt an mindestens einem primären und/oder sekundären Fettaminsalz als Zusatz eingesetzt. Dabei ist es bevorzugt, als Calciumsilikatgranulat bzw. -pulver ein solches, welches als Fettaminsalz(e) ein solches bzw. solche, dessen bzw. deren Alkylrest(e) 16 bis 20 bzw. je 16 bis 20, insbesondere 18 bzw. je 18, Kohlenstoffatome aufweist bzw. aufweisen, einzusetzen. Es ist auch bevorzugt, als Calciumsilikatgranulat bzw. -pulver ein solches, welches als Fettaminsalz(e) ein solches bzw. solche mit einer organischen Carbonsäure bzw. organischen Carbonsäuren mit 1 bis 11, insbesondere 2 bis 4, Kohlenstoffatomen, ganz besonders Essigsäure, enthält, einzusetzen. Ferner ist es bevorzugt, als Calciumsilikatgranulat bzw. -pulver ein solches, welches als Fettaminsalz(e) ein solches bzw. solche, bei welchem bzw. welchen nur ein Teil, insbesondere 25 bis 30%, durch die Säure neutralisiert ist, enthält, einzusetzen. Auch bei dieser Ausführungsform ist die Ab- bzw. Adsorption oleophil bzw. nach dem oleophilen Verhalten zu verschoben.

Gegebenenfalls kann als Calciumsilikatgranulat bzw. -pulver ein solches, welches mindestens ein Polyamidwachs zusammen mit mindestens einem Fettaminsalz enthält, eingesetzt werden.

Es ist zweckmäßig, als Calciumsilikatgranulat bzw. -pulver ein solches, in welches das Polyamidwachs bzw. die Polyamidwachse und/oder das Fettaminsalz bzw. die Fettaminsalze durch Zugabe zur Herstellungsausgangsmischung vor deren Umsetzen eingebracht worden ist bzw. sind, einzusetzen. Dabei müssen natürlich die Mengen, wie die oben angegebenen zweckmäßigen Mengenbereiche, der übrigen Ausgangsstoffe, entsprechend anteilig vermindert sein. Überraschenderweise haben nämlich die genannten Zusatzstoffe die wesentliche Eigenschaft, daß sie das Verfahren zur Herstellung der erfindungsgemäßen verwendeten Calciumsilikatgranulate bzw. -pulver und deren gewünschte Produktcharakteristik vermöge ihrer chemischen Beständigkeit gegenüber den verfahrensbedingten chemisch-physikalischen Einwirkungen nicht beeinträchtigen. So können die erforderlichen Herstellungsverfahrensschritte, beispielsweise die Temperaturbehandlung bei etwa 200° C unter den Bedingungen der Hydrothermalhärtung, ohne Beeinträchtigung uneingeschränkt durchgeführt worden sein, und zwar ohne daß die angestrebten Produkteigenschaften in ihrer Wirksamkeit hinsichtlich der erzielten überlegenen Saugfähigkeit in Ausrichtung auf Flüssigkeiten mit verschiedener Oberflächenspannung abgebaut und die sonstigen Produktparameterwerte beeinträchtigt würden.

Im Falle eines Polyamidwachses bzw. von Polyamidwachsen als Zusatz ist es bevorzugt, daß dessen bzw. deren Zugabe zur Herstellungsausgangsmischung in einer Menge von 3 bis 7 Gew.-%, insbesondere 5 Gew.-%, bezogen auf die eingesetzte Feststoffgemischmenge als Trockengewicht berechnet, erfolgt ist. Je höher die Polyamidwachsmenge ist, um so stärker oleophil ist das Ab- bzw. Adsorptionsverhalten der so erhaltenen erfindungsgemäß verwendeten Calciumsilikatgranulate bzw. -pulver. Bei Polyamidwachsmengen unterhalb 3 Gew.-% ist das Ab- bzw. Adsorptionsverhalten nicht ganz oder bestimmend oleophil.

Im Falle eines Fettaminsalzes bzw. von Fettaminsalzen als Zusatz ist es bevorzugt, daß dessen beziehungsweise deren Zugabe zur Herstellungsausgangsmischung in einer Menge von 0,05 bis 0,5 Gew.-%, insbesondere 0,05 bis 0,3 Gew.-%, ganz besonders 0,25 Gew.-%, bezogen auf die eingesetzte Feststoffgemischmenge als Trockengewicht berechnet, erfolgt ist. Dabei sind diese Zusätze vorteilhaft in Form von, vorzugsweise 5 bis 15%igen, insbesondere 10%igen, wäßrigen Dispersionen zugegeben worden. Die Menge der Dispersion muß natürlich auch hier der zugegebenen Zusatztrockenmenge angepaßt worden sein. Beispielsweise im Falle einer 10%igen wäßrigen Dispersion ist der bevorzugte Mengenbereich derselben 0,5 bis 5 Gew.-%, insbesondere 0,5 bis 3

Gew.-%, ganz besonders 2,5 Gew.-%, bezogen auf die eingesetzte Feststoffgemischmenge als Trockengewicht berechnet. Je höher die Fettaminsalzmenge ist, um so stärker oleophil ist das Ab- bzw. Adsorptionsverhalten der so erhaltenen erfindungsgemäß verwendeten Calciumsilikatgranulate bzw. -pulver.

Nach einer noch weiteren vorteilhaften Ausführungsform der erfindungsgemäßen Verwendung wird als Calciumsilikatgranulat bzw. -pulver ein solches, welches nach seinem Trocknen mit einem oder mehreren verseifungsbeständigen Alkylalkoxisilanen und/oder Phenylalkoxisilanen behandelt worden ist, eingesetzt. Dabei kann diese Behandlung vor oder nach dem Klassieren vorgenommen worden sein. Sie kann durch Tauchen oder Besprühen der Calciumsilikatgranulate bzw. -pulver in die bzw. mit den Alkylalkoxysilane(n) und/oder Phenylalkoxysilane(n) oder Aufdampfen der letzteren auf die ersteren vorgenommen worden sein. Vorzugsweise wird als Calciumsilikatgranulat bzw. -pulver ein solches, welches als Alkylalkoxysilan(e) ein solches bzw. solche, dessen bzw. deren, gegebenenfalls verzweigter, Alkylteil 1 bis 6, insbesondere 3 bis 6, ganz besonders 3, Kohlenstoffatome aufweist und dessen beziehungsweise deren, gegebenenfalls verzweigter, Alkoxyteil 1 bis 3, insbesondere 3 bis 6, ganz besonders 3, Kohlenstoffatome aufweist und dessen bzw. deren, gegebenenfalls verzweigter, Alkoxyteil 1 bis 3, insbesondere 3, Kohlenstoffatome hat, enthält, eingesetzt. Es ist bevorzugt, als Calciumsilikatgranulat bzw. -pulver ein solches, welches als Phenylalkoxysilan(e) ein solches bzw. solche, dessen bzw. deren, gegebenenfalls verzweigter, Alkoxyteil 1 bis 3, insbesondere 3, Kohlenstoffatome aufweist, enthält, einzusetzen. Am meisten bevorzugt ist der Alkylrest in Isopropylrest und der Alkoxyrest ein Isopropoxyrest. Ferner ist es bevorzugt, daß die Behandlung mit dem verseifungsbeständigen Alkylalkoxysilan und/oder Phenylalkoxysilan bzw. den verseifungsbeständigen Alkylalkoxysilanen und/oder Phenylalkoxysilanen bis zur Aufnahme einer Menge von mindestens 0,5 Gew.-%, insbesondere 1, 2 bis 1,6 Gew.-%, ganz besonders 0,9 Gew.-%, erfolgt ist.

Wie bereits erwähnt, sind die erfindungsgemäß verwendeten Calciumsilikatgranulate bzw. -pulver an sich schon geruchbindend. Es ist aber auch möglich, solche mit einem Zusatz von Deodorierungsmitteln, wie Parfümölen, die auf sie aufgebracht worden sein können, zu verwenden. Gegebenenfalls können erfindungsgemäß Calciumsilikatgranulate bzw. -pulver mit einem Zusatz von Farbindikatoren zur Kontrolle des Sättigungsgrades der Ab- beziehungsweise Adsorption verwendet werden.

Die Erfindung wird anhand der folgenden Beispiele in Verbindung mit den beiliegenden Zeichnungen näher erläutert. Hierbei sind:

Fig. 1 das Fließschema der Herstellung eines nach einer Ausführungsform der Erfindung verwendeten Calciumsilikatgranulates beziehungsweise -pulvers und

Fig. 2 das Fließschema der Herstellung von nach anderen Ausführungsformen der Erfindung verwendeten Calciumsilikatgranulaten beziehungsweise -pulvern.

## Beispiel 1

Die Herstellung des verwendeten Calciumsilikatgranulates bzw. -pulvers erfolgte unter Bezugnahme auf die Fig. 1 wie folgt:

Es wurden folgende Ausgangsfeststoffe verwendet:

50,4 Gew.-% Quarzmehl mit einer Korngröße unter 100 µm
33,1 Gew.-% Weißfeinkalk
16,5 Gew.-% Kalkhydrat

Weiterhin wurden 60 Gew.-% Wasser, bezogen auf die Menge der Ausgangsfeststoffe, verwendet.

Es wurden das Quarzmehl aus einem Quarzmehlsilo 1, der Weißfeinkalk aus einem Weißfeinkalksilo 2 und das Kalkhydrat aus einem Kalkhydratsilo 3 über eine Waage 4 in einen Mischer 7 als Dispergiervorrichtung eingebracht. In diesen Mischer 7 wurde auch das Mischwasser aus einem Mischwasserbehälter 6 eingeführt.

Ferner wurde in einem Aktivschaumgenerator 5, bestehend aus einem Kompressor, der komprimierte Luft erzeugt, und einer Ansaugdüse, welche aus einem (nicht dargestellten) Flüssigkeitsbehälter Natriumlaurylsulfat mit einem Aktivsubstanzgehalt von 50% in 2%iger Lösung in Wasser ansaugte und diese nach dem Injektorprinzip in den komprimierten Luftstrom einsprühte, ein mikroporiger stabiler Schaum erzeugt. So bildeten sich kleinste Luftbläschen zu einem schlagsahneartigen Schaum.

Nun erfolgte im Mischer 7 das Mischen unter Dispergieren der festen Ausgangsstoffe im Wasser, wobei zunächst 4 Minuten ohne Schaum gemischt und dann der wie vorstehend beschrieben erzeugte mikroporige stabile Schaum eingeführt und 2 Minuten lang in das Gemisch aus den festen Ausgangsstoffen und dem Wasser eingearbeitet wurde.

Danach wurde die fertige Mischung durch ein Rohr in Formkästen 8, die mittels Trennwände in einzelne Kammern unterteilt waren, eingefüllt. Nach einer Vorreaktionszeit von 30 Minuten bei 70 bis 80° C, welche Temperatur sich durch die Löschreaktionswärme des Weißfeinkalkes einstellte, wurden

die Trennwände aus den Formkästen herausgezogen. Die Formkästen 8 mit den so erhaltenen Formlingen wurden zu einem Wagenzug 9 zusammengestellt und in einen Autoklaven 10 zur hydrothermalen Erhärtung eingefahren. Diese erfolgte 7 Stunden (Volldruckzeitraum) bei einem Druck von 13 bar.

Der Wagenzug 9 mit den Formkästen 8 mit den gehärteten Calciumsilikatblöcken wurde aus dem Autoklaven 10 nach dessen Entspannung ausgefahren.

Die Formkästen mit den gehärteten Calciumsilikatblöcken wurden vom Wagenzug 9 mittels eines Kranes angehoben, wobei eine Drehung um 90° erfolgte. Da die Umrandungsteile der Formkästen 8 konisch waren, gestatteten sie ein leichtes Herausfallen der Calciumsilikatblöcke aus dem letzteren. Die Formkästen 8 wurden nach ihrer Entleerung wieder in den Kreislauf zur erneuten Befüllung zurückgeführt. Die aus den Formkästen 8 entfernten Calciumsilikatblöcke wurden mittels eines Frontladers oder über einen Vorsilobehälter in einen Walzenbrecher 11 eingebracht, in welchem sie gebrochen wurden. Das so gebrochene Calciumsilikat wurde durch ein Gurtbecherwerk 12 zu einem Trockner 13 gefördert. In diesem wurde es bis zu einer Restfeuchte von etwa 3% getrocknet.

Das getrocknete Calciumsilikat mit Körnern verschiedener Korngröße wurde einer Siebmaschine 14 zugeführt und in dieser in eine Korngruppe mit Körnern bis 2,5 mm, welche in einem Behälter 15 gesammelt wurde, und in eine Korngruppe mit Körnern von 2,5 bis 4 mm, welche in einem anderen Behälter 16 gesammelt wurde, getrennt, wobei das Überkorn durch eine Rücklaufleitung 17 zum Walzenbrecher 11 zurückgeführt wurde.

Die erstere Korngruppe konnte in analoger Weise auch noch in eine Korngruppe mit Körnern unter 0,5 mm (Calciumsilikatpulver) und in eine Korngruppe mit Körnern von 0,5 bis 2,5 mm getrennt werden.

Die durchschnittlichen Materialparameterwerte der erhaltenen Calciumsilikatgranulate bzw. -pulver waren wie folgt:

| | |
|---|---|
| Druckfestigkeit (gemessen am kompakten Formkörper vor der Zerkleinerung) in N/$mm^2$ | |
| bei einer Rohdichte von 400 kg/$m^3$ | 7,5 |
| bei einer Rohdichte von 700 kg/$m^3$ | 10,2 |
| Rohdichte in kg/$m^3$ | 400 bis 700 |
| Schüttgewicht in kg/$m^3$ | 250 bis 500 |
| (Schüttgewicht in kg/$m^3$ der Korngrößen bis 2,5 mm | 300 bis 500 |
| Schüttgewicht in kg/$m^3$ der Korngrößen von 2,5 bis 4 mm | 250 bis 450) |
| Saugkapazität in bezug auf Öl (Maschinenöl) | |
| (bei einem Schüttgewicht von 450 kg/$m^3$) | 130 Gew.-% |
| pH-Wert | 9,4 bis 9,8. |

## Beispiel 2

Die Herstellung des verwendeten Calciumsilikatgranulates bzw. -pulvers erfolgte unter Bezugnahme auf die Figur 1 wie folgt:

Es wurde das Beispiel 1 mit dem Unterschied wiederholt, daß folgende Ausgangsfeststoffe verwendet wurden:

| | |
|---|---|
| 50,4 Gew.-% | Quarzmehl mit einer Korngröße unter 100 µm |
| 42 Gew.-% | gebrannter Kalk |
| 7,6 Gew.-% | Kalkhydrat. |

Die durchschnittlichen Materialparameterwerte der erhaltenen Calciumsilikatgranulate bzw. -pulver waren wie folgt:

| | |
|---|---|
| Druckfestigkeit (gemessen am kompakten Formkörper vor der Zerkleinerung) in N/$mm^2$ | |
| bei einer Rohdichte von 400 kg/$m^3$ | 7,5 |
| bei einer Rohdichte von 700 kg/$m^3$ | 10,2 |
| Rohdichte in kg/$m^3$ | 400 bis 700 |
| Schüttgewicht in kg/$m^3$ | 250 bis 500 |
| (Schüttgewicht in kg/$m^3$ der Korngrößen bis 2,5 mm | 300 bis 500 |
| Schüttgewicht in kg/$m^3$ der Korngrößen von 2,5 bis 4 mm | 250 bis 450) |
| Saugkapazität in bezug auf Öl (Maschinenöl) | |
| (bei einem Schüttgewicht von 450 kg/$m^3$) | 134 Gew.-% |
| pH-Wert | 9,4 bis 9,8. |

## Beispiel 3

Die Herstellung des verwendeten Calciumsilikatgranulates bzw. -pulvers erfolgte unter Bezugnahme auf die Figur 1 wie folgt:

Es wurde das Beispiel 1 mit dem Unterschied wiederholt, daß folgende Ausgangsfeststoffe verwendet wurden:

57 Gew.-% Quarzmehl mit einer Korngröße unter 100 µm
29 Gew.-% gebrannter Kalk
14 Gew.-% Kalkhydrat

Die durchschnittlichen Materialparameterwerte der erhaltenen Calciumsilikatgranulate bzw. -pulver waren wie folgt:

| | |
|---|---|
| Druckfestigkeit (gemessen am kompakten Formkörper vor der Zerkleinerung) in $N/mm^2$ | |
| bei einer Rohdichte von 400 $kg/m^3$ | 6,5 |
| bei einer Rohdichte von 700 $kg/m^3$ | 8,5 |
| Rohdichte in $kg/m^3$ | 400 bis 700 |
| Schüttgewicht in $kg/m^3$ | 250 bis 500 |
| (Schüttgewicht in $kg/m^3$ der Korngrößen bis 2,5 mm | 300 bis 500 |
| Schüttgewicht in $kg/m^3$ der Korngrößen von 2,5 bis 4 mm | 250 bis 450) |
| Saugkapazität in bezug auf Öl (Maschinenöl) | |
| (bei einem Schüttgewicht von 450 $kg/m^3$) | 135 Gew.-% |
| pH-Wert | 9,4 bis 9,8. |

## Beispiel 4

Die Herstellung des verwendeten Calciumsilikatgranulates bzw. -pulvers mit einem Gehalt an einem Polyamidwachs erfolgte unter Bezugnahme auf die Figur 2 wie folgt:

Es wurden neben der im Beispiel 1 verwendeten Wassermenge folgende Ausgangsstoffe verwendet:

47,9 Gew.-% Quarzmehl mit einer Korngröße unter 100 µm
31,4 Gew.-% gebrannter Kalk
15,7 Gew.-% Kalkhydrat
5,0 Gew.-% eines nicht amorphen mikronisierten Diamidwachses der Formel

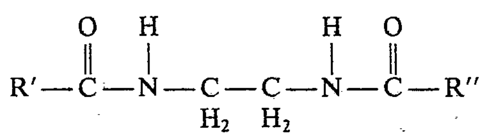

worin R′ für einen Alkylrest mit 12 Kohlenstoffatomen steht und R″ einen Alkylrest mit 18 Kohlenstoffatomen bedeutet, mit einem Schmelzpunkt von 185°C und einem Zersetzungspunkt von etwa 205°C (Lanco-Wax HM 1666, bezogen von der Firma Langer & Co., Ritterhude).

Die Verfahrensweise des Beispieles 1 wurde mit dem Unterschied durchgeführt, daß dem Mischer 7 aus einem Zusatzsilo 18 über eine weitere Waage 19 das obige Diamidwachs zugeführt wurde. Die übrigen Teile der Vorrichtung der Figur 2 sind wie die mit denselben Bezugszeichen bezeichneten entsprechenden Teile der Vorrichtung der Figur 1.

Die Ab- bzw. Adsorptionsparameter des erhaltenen Calciumsilikatgranulates bzw. -pulvers waren wie folgt:

| | |
|---|---|
| Saugkapazität in bezug auf Öl (Maschinenöl) | |
| (bei einem Schüttgewicht von 450 $kg/m^3$) | 132 Gew.-% |

Die übrigen Materialparameter waren wie im Beispiel 1.

Bei den bekannten Handelsprodukten auf anorganischer Grundlage ist die Saugkapazität in bezug auf Öl viel geringer, wie es aus der folgenden Zusammenstellung hervorgeht:

| | |
|---|---|
| Sepiolithe (Rohdichte: 600 $kg/m^3$) | 48 Gew.-% |
| Bimsstein (Rohdichte: 570 $kg/m^3$) | 53 Gew.-% |
| »Hauser 1« (sepiolithähnlich) | 68 Gew.-% |

| | |
|---|---|
| Attapulgit (Rohdichte: 500 kg/m³) | 72 Gew.-% |
| »Hykro« | 61,5 Gew.-% |

Daraus geht hervor, daß das erhaltene Calciumsilikatgranulat bzw. -pulver nahezu ausschließlich Öl ab- bzw. adsorbierte, also sein Ab- bzw. Adsorptionsverhalten nahezu völlig oleophil war. Daher eignete es sich als überlegenes Ab- bzw. Adsorptionsmittel für Öle, beispielsweise wenn sie ausgelaufen sind.

Beispiel 5

Die Herstellung des verwendeten Calciumsilikatgranulates bzw. -pulvers mit einem Gehalt an einem Fettaminsalz erfolgte unter Bezugnahme auf die Figur 2 nach einer im Beispiel 4 beschriebenen Verfahrensweise mit dem Unterschied, daß an Stelle des Polyamidwachses ein Fettaminsalz aus dem Zusatzsilo 18 über die weitere Waage 19 dem Mischer 7 zugeführt wurde. Dabei wurden neben der im Beispiel 1 verwendeten Wassermenge folgende Ausgangsstoffe verwendet:

| | |
|---|---|
| 50,3 Gew.-% | Quarzmehl mit einer Korngröße unter 100 µm |
| 41,9 Gew.-% | gebrannter Kalk |
| 7,6 Gew.-% | Kalkhydrat |
| 0,25 Gew.-% | zu 28% mit Essigsäure neutralisiertes Stearylamin in Form von 2,5 Gew.-% seiner 10%igen wäßrigen Dispersion. |

Die Ab- bzw. Adsorptionsparameter des erhaltenen Calciumsilikatgranulates bzw. -pulvers waren wie folgt:

| | |
|---|---|
| Saugkapazität in bezug auf Öl (Maschinenöl) (bei einem Schüttgewicht von 450 kg/m³) | 140 Gew.-% |

Die übrigen Materialparameter waren wie im Beispiel 2.

Daraus geht hervor, daß das erhaltene Calciumsilikatgranulat bzw. -pulver nahezu ausschließlich Öl ab- bzw. adsorbierte, also sein Ab- bzw. Adsorptionsverhalten nahezu völlig oleophil war. Daher eignete es sich als den bekannten Handelsprodukten ebenfalls überlegenes Ab- bzw. Adsorptionsmittel für Öle, beispielsweise wenn sie ausgelaufen sind.

Beispiel 6

Das im Beispiel 1 erhaltene Calciumsilikatgranulat bzw. -pulver wurde mit Isopropylisopropoxysilan bis zur Aufnahme von 0,9 Gew.-% desselben besprüht.

So wurde ein Calciumsilikatgranulat bzw. -pulver mit einer Saugkapazität von 135 Gew.-% in bezug auf Öl (Maschinenöl) erhalten. Es war rein oleophil und hydrophob, wobei die Wasseraufnahme nach der Wasserlagerung (überstehende Wassersäule: etwa 1 cm) von 72 Stunden unter 1,0% lag. Daher eignete es sich als den bekannten Handelsprodukten ebenfalls überlegenes Ab- bzw. Adsorptionsmittel für Öle, beispielsweise wenn sie ausgelaufen sind.

Beispiel 7

Die Herstellung des verwendeten Calciumsilikatgranulates bzw. -pulvers erfolgte wie folgt:

Die Verfahrensweise des Beispiels 4 wurde mit dem Unterschied wiederholt, daß neben der im Beispiel 1 verwendeten Wassermenge folgende Ausgangsstoffe verwendet wurden:

| | |
|---|---|
| 54,1 Gew.-% | Quarzmehl mit einer Korngröße unter 100 µm |
| 27,6 Gew.-% | gebrannter Kalk |
| 13,3 Gew.-% | Kalkhydrat |
| 5,0 Gew.-% | des im Beispiel 4 verwendeten Diamidwachses. |

Die Ab- bzw. Adsorptionsparameter des erhaltenen Calciumsilikatgranulates bzw. -pulvers waren wie folgt:

| | |
|---|---|
| Saugkapazität in bezug auf Öl (Maschinenöl) (bei einem Schüttgewicht von 450 kg/m³) | 136 Gew.-% |

Die übrigen Materialparameter waren wie im Beispiel 3.

Daraus geht hervor, daß das erhaltene Calciumsilikatgranulat bzw. -pulver nahezu ausschließlich Öl ab- bzw. adsorbierte, also sein Ab- bzw. Adsorptionsverhalten nahezu völlig oleophil war. Daher eignete es sich als den bekannten Handelsprodukten ebenfalls überlegenes Ab- bzw. Adsorptionsmittel für Öle, beispielsweise wenn sie ausgelaufen sind.

Beispiel 8

Die Herstellung des verwendeten Calciumsilikatgranulates bzw. -pulvers erfolgte wie folgt:
Die Verfahrensweise des Beispiels 5 wurde mit dem Unterschied wiederholt, daß neben der im Beispiel 1 verwendeten Wassermenge folgende Ausgangsstoffe verwendet wurden:

| | |
|---|---|
| 56,9 Gew.-% | Quarzmehl mit einer Korngröße unter 100 µm |
| 28,9 Gew.-% | gebrannter Kalk |
| 14 Gew.-% | Kalkhydrat |
| 0,25 Gew.-% | zu 28% mit Essigsäure neutralisiertes Stearylamin in Form von 2,5 Gew.-% seiner 10%igen wäßrigen Dispersion. |

Die Ab- bzw. Adsorptionsparameter des erhaltenen Calciumsilikatgranulates bzw. -pulvers waren wie folgt:

| | |
|---|---|
| Saugkapazität in bezug auf Öl (Maschinenöl) (bei einem Schüttgewicht von 450 kg/m³) | 134 Gew.-%. |

Die übrigen Materialparameter waren wie im Beispiel 3.
Daraus geht hervor, daß das erhaltene Calciumsilikatgranulat bzw. -pulver nahezu ausschließlich Öl ab- bzw. adsorbierte, also sein Ab- bzw. Adsorptionsverhalten nahezu völlig oleophil war. Daher eignete es sich als den bekannten Handelsprodukten ebenfalls überlegenes Ab- bzw. Adsorptionsmittel für Öle, beispielsweise wenn sie ausgelaufen sind.

**Patentansprüche**

1. Verwendung von Calciumsilikatgranulat bzw. -pulver mit Mikroporenstruktur, welches durch Umsetzen von kristallinem und gegebenenfalls amorphem Siliciumdioxid beziehungsweise dieses oder diese enthaltenden Materialien mit Calciumoxid bzw. dieses enthaltenden Materialien in einem Molverhältnis von CaO zu $SiO_2$ von 0,8 : 1 bis 1,1 : 1 unter Homogenisieren derselben in Wasser und Formen, Autoklavenhärten, Zerkleinern, Trocknen und Klassieren erhalten worden ist, mit der weiteren Maßgabe, daß das Homogenisieren bei der Umsetzung durch Dispergieren der festen Ausgangsstoffe im Wasser unter Zugabe einer vorher in Wasser in einen mikroporigen stabilen Schaum überführten anionenaktiven grenzflächenaktiven Substanz durchgeführt worden ist, als oleophiles Ab- bzw. Adsorptionsmittel.

2. Verwendung nach Anspruch 1, dadurch gekennzeichnet, daß man als Calciumsilikatgranulat bzw. -pulver ein solches mit einem Gehalt an mindestens einem Polyamidwachs mit einem Schmelzpunkt von 170 bis 195° C, insbesondere 180 bis 190° C, und einem Zersetzungspunkt von mindestens 200° C als Zusatz einsetzt.

3. Verwendung nach Anspruch 2, dadurch gekennzeichnet, daß man als Calciumsilikatgranulat bzw. -pulver ein solches, welches als Polyamidwachs(e) ein solches bzw. solche von nicht amorpher Struktur in mikronisiertem Zustand enthält, einsetzt.

4. Verwendung nach Anspruch 2 oder 3, dadurch gekennzeichnet, daß man als Calciumsilikatgranulat bzw. -pulver ein solches, welches als Polyamidwachs(e) ein Diamidwachs bzw. Diamidwachse der allgemeinen Formel

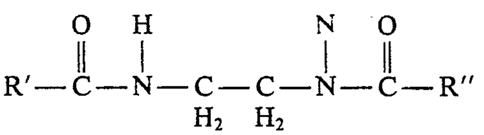

worin R' und R'' für Alkylreste mit 12 bis 20, insbesondere 12 bis 18, Kohlenstoffatomen stehen, enthält, einsetzt.

5. Verwendung nach einem der vorangehenden Ansprüche, dadurch gekennzeichnet, daß man als Calciumsilikatgranulat bzw. -pulver ein solches mit einem Gehalt an mindestens einem primären und/oder sekundären Fettaminsalz als Zusatz einsetzt.

6. Verwendung nach Anspruch 5, dadurch gekennzeichnet, daß man als Calciumsilikatgranulat bzw. -pulver ein solches, welches als Fettaminsalz(e) ein solches bzw. solche, dessen bzw. deren

Alkylrest(e) 16 bis 20 bzw. je 16 bis 20 Kohlenstoffatome aufweist bzw. aufweisen, einsetzt.

7. Verwendung nach Anspruch 5 oder 6, dadurch gekennzeichnet, daß man als Calciumsilikatgranulat bzw. -pulver ein solches, welches als Fettaminsalz(e) ein solches bzw. solche mit einer organischen Carbonsäure bzw. organischen Carbonsäuren mit 1 bis 11, insbesondere 2 bis 4, Kohlenstoffatomen enthält, einsetzt.

8. Verwendung nach Anspruch 7, dadurch gekennzeichnet, daß man als Calciumsilikatgranulat bzw. -pulver ein solches, welches als Fettaminsalz(e) ein solches bzw. solche, bei welchem bzw. welchen nur ein Teil, insbesondere 25 bis 30%, durch die Säure neutralisiert ist, enthält, einsetzt.

9. Verwendung nach einem der vorangehenden Ansprüche, dadurch gekennzeichnet, daß man als Calciumsilikatgranulat bzw. -pulver ein solches, in welches das Polyamidwachs bzw. die Polyamidwachse und/oder das Fettaminsalz bzw. die Fettaminsalze durch Zugabe zur Herstellungsausgangsmischung vor deren Umsetzen eingebracht worden ist bzw. sind, einsetzt.

10. Verwendung nach einem der Ansprüche 2 bis 9, dadurch gekennzeichnet, daß man als Calciumsilikatgranulat bzw. -pulver ein solches, bei welchem die Zugabe des Polyamidwachses bzw. der Polyamidwachse zur Herstellungsausgangsmischung in einer Menge von 3 bis 7 Gew.-%, insbesondere 5 Gew.-%, bezogen auf die eingesetzte Feststoffgemischmenge als Trockengewicht berechnet, erfolgt ist, einsetzt.

11. Verwendung nach einem der Ansprüche 5 bis 10, dadurch gekennzeichnet, daß man als Calciumsilikatgranulat bzw. -pulver ein solches, bei welchem die Zugabe des Fettaminsalzes bzw. der Fettaminsalze zur Herstellungsausgangsmischung in einer Menge von 0,05 bis 0,5 Gew.-%, insbesondere 0,05 bis 0,3 Gew.-%, bezogen auf die eingesetzte Feststoffgemischmenge, als Trockengewicht berechnet, erfolgt ist, einsetzt.

12. Verwendung nach einem der Ansprüche 1 bis 11, dadurch gekennzeichnet, daß man als Calciumsilikatgranulat bzw. -pulver ein solches, welches nach seinem Trocknen mit einem oder mehreren verseifungsbeständigen Alkylalkoxysilanen und/oder Phenylalkoxysilanen behandelt worden ist, einsetzt.

13. Verwendung nach Anspruch 12, dadurch gekennzeichnet, daß man als Calciumsilikatgranulat bzw. -pulver ein solches, welches als Alkylalkoxysilan(e) ein solches bzw. solche, dessen bzw. deren, gegebenenfalls verzweigter, Alkylteil 1 bis 6, insbesondere 3 bis 6, Kohlenstoffatome aufweist und dessen bzw. deren, gegebenenfalls verzweigter, Alkoxyteil 1 bis 3, Kohlenstoffatome hat, enthält, einsetzt.

14. Verwendung nach Anspruch 12, dadurch gekennzeichnet, daß man als Calciumsilikatgranulat bzw. -pulver ein solches, welches als Phenylalkoxysilan(e) ein solches bzw. solche, dessen bzw. deren, gegebenenfalls verzweigter, Alkoxyteil 1 bis 3 Kohlenstoffatome aufweist, enthält, einsetzt.

15. Verwendung nach einem der Ansprüche 12—14, dadurch gekennzeichnet, daß man als Calciumsilikatgranulat bzw. -pulver ein solches, das mit einem verseifungsbeständigen Alkylalkoxysilan und/oder Phenylalkoxysilan bzw. den verseifungsbeständigen Alkylalkoxysilanen und/oder Phenylalkoxysilanen bis zur Aufnahme einer Menge von mindestens 0,5 Gew.-%, insbesondere 1,2 bis 1,6 Gew.-% behandelt worden ist, einsetzt.

16. Calciumsilikatgranulat bzw. -pulver wie in einem oder mehreren der Ansprüche 2—15 beschrieben.

## Claims

1. Use of calcium silicate granulate or powder of microporous structure, obtained by reacting crystalline and possibly amorphous silicon dioxide or materials containing the former or both with calcium oxide or materials containing the same in a $CaO : SiO_2$ molar ratio of 0.8 : 1—1.1 : 1, with homogenization thereof in water and moulding, autoclave hardening, comminuting, drying and classifying, with the further proviso that homogenization during the reaction has been carried out by dispersion of the solid raw materials in water with the addition of an anion-active interface-active substance which has previously been converted to a microporous stable foam in water, as an oleophilic absorbent or adsorbent.

2. Use according to claim 1, characterised in that the calcium silicate granulate or powder used contains at least one polyamide wax as an additive, the wax melting point being 170 to 195° C, more particularly 180 to 190° C, and the decomposition point being at least 200° C.

3. Use according to claim 2, characterised in that the calcium silicate granulate or powder used is one in which the or each polyamide wax has a non-amorphous structure in the micronized state.

4. Use according to claim 2 or 3, characterised in that the calcium silicate granulate or powder used is one in which the or each polyamide wax is a diamide wax of the general formula

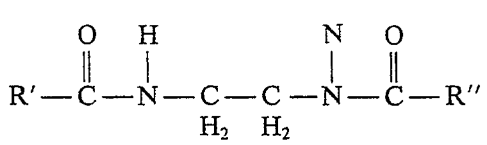

where R' and R'' denote alkyl radicals containing 12 to 20, more particularly 12 to 18, carbon atoms.

5. Use according to any one of the preceding claims, characterised in that the calcium silicate granulate or powder used is one which contains at least one primary and/or secondary fatty amine salt as an additive.

6. Use according to claim 5, characterised in that the calcium silicate granulate or powder used is one in which the or each fatty amine salt has the or each alkyl radical containing 16 to 20 carbon atoms.

7. Use according to claim 5 or 6, characterised in that the calcium silicate granulate or powder used is one in which the or each fatty amine salt contains an organic carboxylic acid or organic carboxylic acids containing 1—11, more particularly 2—4, carbon atoms.

8. Use according to claim 7, characterised in that the calcium silicate granulate or powder used is one in which the or each fatty amine salt is such that only part thereof, more particularly 25 to 30%, is neutralized by the acid.

9. Use according to any one of the preceding claims, characterised in that the calcium silicate granulate or powder used is one in which the or each polyamide wax and/or the or each fatty amine salt has been introduced by being added to the initial production mixture before its reaction.

10. Use according to any one of claims 2 to 9, characterised in that the calcium silicate granulate or powder used is one in which the or each polyamide wax has been added to the initial production mixture in a quantity of from 3 to 7% by weight, more particularly 5% by weight, based on the quantity of solids mixture used, calculated as dry weight.

11. Use according to any one of claims 5 to 10, characterised in that the calcium silicate granulate or powder used is one in which the or each fatty amine salt has been added to the initial production mixture in a quantity of from 0.05 to 0.5% by weight, more particularly 0.05 to 0.3% by weight, based on the quantity of solids mixture used, calculated as dry weight.

12. Use according to any one of claims 1 to 11, characterised in that the calcium silicate granulate or powder used is one which, after drying, has been treated with one or more saponification-stable alkyl alkoxy silanes and/or phenyl alkoxy silanes.

13. Use according to claim 12, characterised in that the calcium silicate granulate or powder used is one in which the or each alkyl alkoxy silane has an alkyl part, which may or may not be branched, containing 1—6, more particularly 3—6, carbon atoms and the alkoxy part, which may or may not be branched, containing 1—3 carbon atoms.

14. Use according to claim 12, characterised in that the calcium silicate granulate or powder is one in which the or each phenyl alkoxy silane has an alkoxy part, which may or may not be branched, containing 1—3 carbon atoms.

15. Use according to any one of claims 12 to 14, characterised in that the calcium silicate granulate or powder used is one which has been treated with a saponification-stable alkyl alkoxy silane and/or phenyl alkoxy silane or saponification-stable alkyl alkoxy silanes and/or phenyl alkoxy silanes until it has absorbed a quantity of at least 0.5% by weight, more particularly 1.2—1.6% by weight.

16. Calcium silicate granulate or powder as described in one or more of claims 2—15.

**Revendications**

1. Utilisation, comme produits d'absorption ou d'adsorption oléophile, de granulés, ou poudre, de silicate de calcium à structure microporeuse obtenus en faisant réagir du dioxyde de silicium cristallin, et éventuellement amorphe, ou des matériaux le contenant, avec de l'oxyde de calcium, ou des matériaux le contenant, dans un rapport molaire $CaO/SiO_2$ de 0,8 : 1 à 1,1, en homogénéisant ces produits dans l'eau, en les moulant, en les durcissant en autoclave, en les broyant, en les séchant et en les criblant, à la condition, par ailleurs, que l'homogénéisation ait lieu, lors de la réaction, par dispersion des matières premières solides dans de l'eau, avec addition d'un agent tensio-actif anionique préalablement transformé dans l'eau en une mousse microporeuse stable.

2. Utilisation selon la revendication 1, caractérisée en ce qu'on utilise des granulés, ou poudre, de silicate de calcium contenant au moins comme additif une cire polyamide ayant un point de fusion compris entre 170 et 195° C, notamment 180 et 190° C, et un point de décomposition d'au moins 200° C.

3. Utilisation selon la revendication 2, caractérisée en ce qu'on utilise des granulés, ou poudre, de silicate de calcium contenant comme additif une, ou des, cire(s) polyamide ayant une structure non amorphe à l'état micronisé.

4. Utilisation selon la revendication 2 ou 3, caractérisée en ce qu'on utilise des granulés, ou poudre, de silicate de calcium contenant une, ou des, cire(s) diamide, en tant qu'additif, de la formule générale:

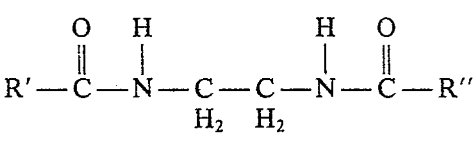

dans laquelle R' et R'' sont des restes alkyle ayant 12 à 20 atomes de carbone, notamment 12 à 18 atomes de carbone.

5. Utilisation selon l'une des revendications précédentes caractérisée en ce qu'on utilise des granulés, ou poudre, de silicate de calcium contenant au moins un sel d'amine grasse primaire ou secondaire, comme additif.

6. Utilisation selon la revendication 5, caractérisée en ce qu'on utilise des granulés, ou poudre, de silicate de calcium comportant un, ou des, sel(s) d'amine grasse dont le, ou les, reste(s) alkyle a de 16 à 20 atomes de carbone.

7. Utilisation selon la revendication 5 ou 6, caractérisée en ce qu'on utilise des granulés, ou poudre, de silicate de calcium contenant un, ou des, sel(s) d'amine grasse comportant un, ou des, acide(s) carboxylique(s) ayant 1 à 11 atomes de carbone, notamment 2 à 4 atomes de carbone.

8. Utilisation selon la revendication 7, caractérisée en ce qu'on utilise des granulés, ou poudre, de silicate de calcium, comportant un, ou des, sel(s) d'amine grasse dont seulement une partie, notamment 25 à 30%, a été neutralisée par l'acide.

9. Utilisation selon l'une des revendications précédentes, caractérisée en ce qu'on utilise des granulés, ou poudre, de silicate de calcium, dans lesquels la, ou les, cire(s) polyamide, et/ou le, ou les, sel(s) d'amine grasse ont été introduits en les ajoutant au mélange initial de fabrication, avant la réaction de celui-ci.

10. Utilisation selon l'une des revendications 2 à 9, caractérisée en ce qu'on utilise des granulés, ou poudre, de silicate de calcium, dans lesquels l'addition de la, ou des, cire(s) polyamide au mélange initial de fabrication s'effectue en une proportion comprise entre 3 et 7% en poids, notamment 5% en poids, calculé en poids sec, rapportée à la quantité de mélange de substances solides utilisée.

11. Utilisation selon l'une des revendications 5 à 10, caractérisée en ce qu'on utilise des granulés, ou poudre, de silicate de calcium dans lesquels l'addition du, ou des, sel(s) d'amine grasse au mélange initial de fabrication s'effectue dans une proportion comprise entre 0,05 et 0,5% en poids, notamment 0,05 et 0,3% en poids, calculée en poids sec, rapportée à la quantité de mélange de substances solides utilisé.

12. Utilisation selon l'une des revendications 1 à 11, caractérisée en ce qu'on utilise des granulés, ou poudre, de silicate de calcium qui ont été traités, après séchage, avec un ou plusieurs alkylalcoxysilanes et/ou phénylalcoxysilanes résistant à la saponification.

13. Utilisation selon la revendication 12, caractérisée en ce qu'on utilise des granulés, ou poudre, de silicate de calcium comportant un, ou des, alkylalcoxysilane(s) dont le reste alkyle, éventuellement ramifié, contient 1 à 6, notamment 3 à 6 atomes de carbone, et dont le radical alcoxy, éventuellement ramifié, contient 1 à 3 atomes de carbone.

14. Utilisation selon la revendication 12, caractérisée en ce qu'on utilise des granulés, ou poudre, de silicate de calcium comportant un, ou des, phénylalcoxysilane(s), dont le radical alcoxy, éventuellement ramifié, contient 1 à 3 atomes de carbone.

15. Utilisation selon l'une des revendications 12 à 14, caractérisée en ce qu'on utilise des granulés, ou poudre, de silicate de calcium qui ont été traités avec un alkylalcoxysilane et/ou un phénylalcoxysilane résistant à la saponification, ou avec les alkylalcoxysilanes et/ou les phénylalcoxysilanes résistant à la saponification jusqu'à l'absorption d'une quantité d'au moins 0,5% en poids, notamment 1,2 à 1,6% en poids.

16. Granulés, ou poudre, de silicate de calcium comme décrits dans une ou plusieurs des revendications 2 à 15.

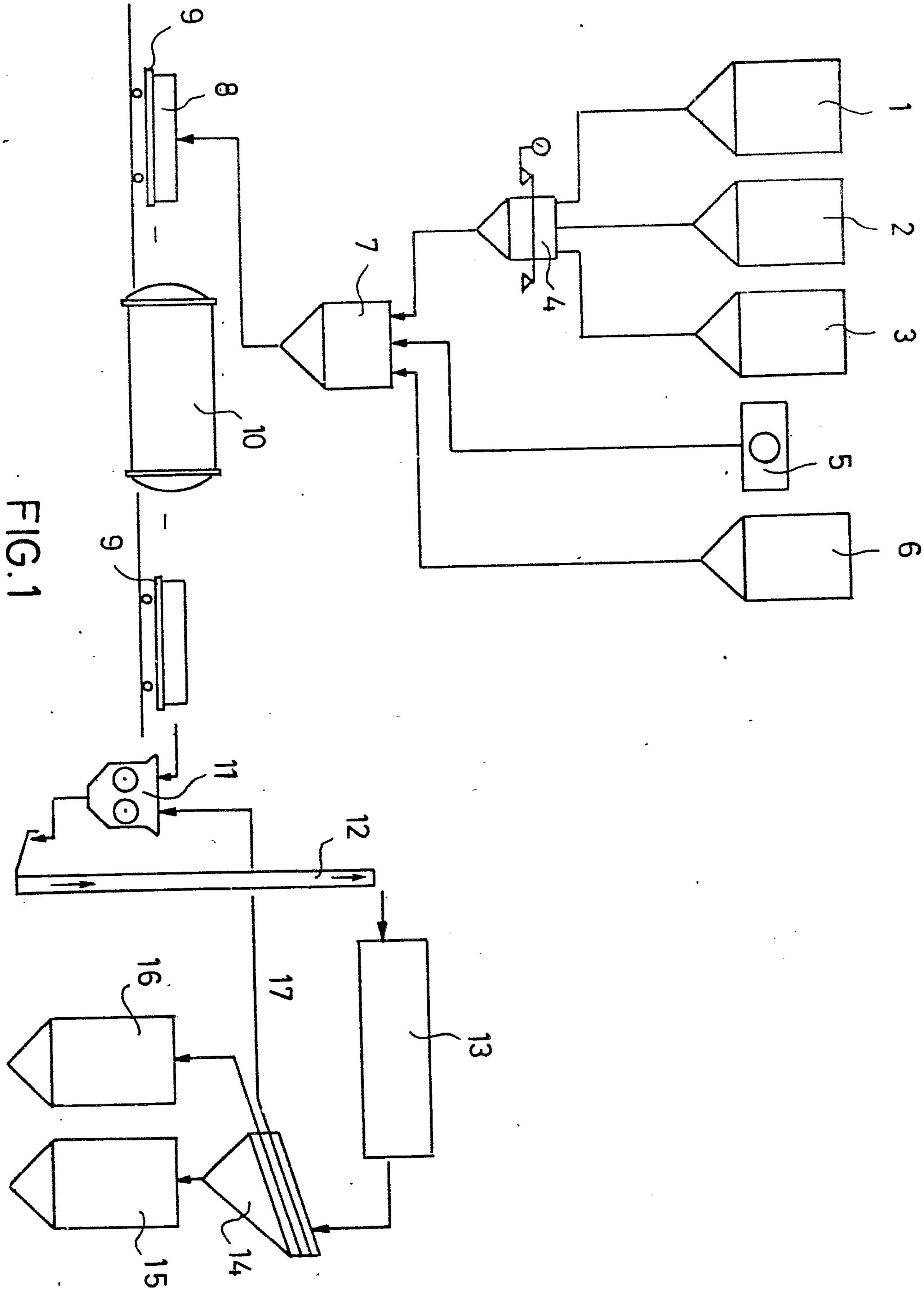


FIG.1

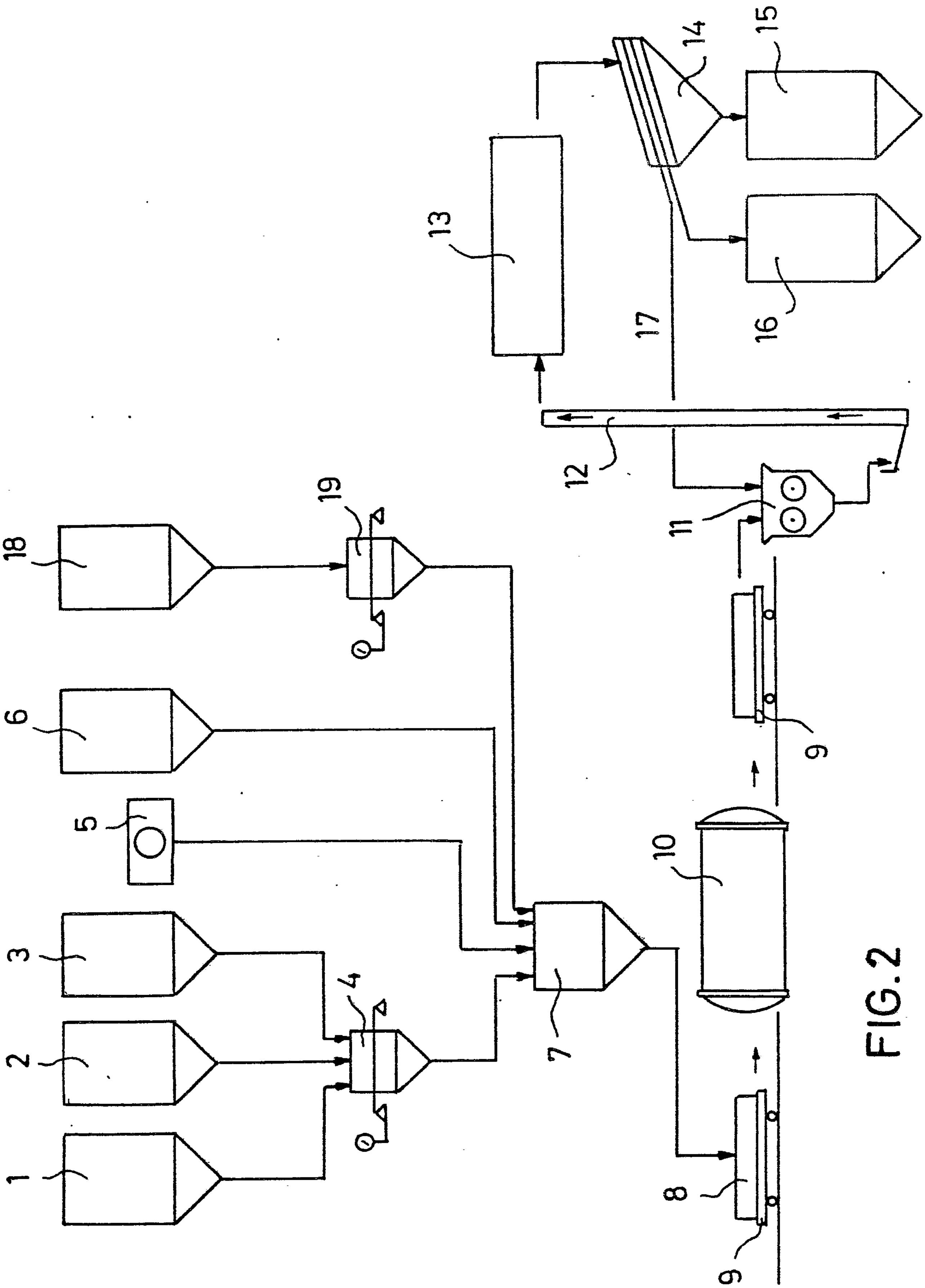


FIG.2